# EUROPEAN PATENT APPLICATION

(11) **EP 2 963 531 A1**
(43) Date of publication of application: **06.01.2016**
(21) Application number: 14757084.0
(22) Date of filing: 21.02.2014
(51) Int. Cl.: G06F 3/048, G06F 3/041, G06F 3/0485

(54) **TERMINAL DEVICE, INFORMATION DISPLAY METHOD AND RECORDING MEDIUM**

(30) Priority: 27.02.2013 JP 2013037845
(71) Applicant: NEC CORPORATION, Tokyo 108-8001 (JP)
(72) Inventor: YOSHIMURA Takashi, Tokyo 1088001 (JP)
(74) Representative: Vossius & Partner Patentanwälte Rechtsanwälte mbB
(86) International application number: PCT/JP2014/054119
(87) International publication number: WO 2014/132882

(57) **Abstract**

A screen display (103) displays information. A first detector (12) detects a first input. A second detector (13) detects a second input. A designator (14) designates specific information from among information displayed by the screen display (103) on the basis of the first input. A screen controller (15) causes the screen display (103) to display new information on the basis of the second input. The screen display (103) is caused to display the new information by the screen controller (15) while still displaying the specific information designated by the designator (14).

## Description

### Technical Field

The present disclosure relates to a terminal device provided with a display function, an information display method, and a non-transitory recording medium.

### Background Art

A terminal device such as a mobile terminal device displays content by updating displayed information by means of scrolling, page transition, and the like.

In such a terminal device, when an operating person finds desired information and then scrolls the screen or updates the page to display new information, the previous information disappears from the screen. Due to this, the operating person who desires to keep the previous information needs to do, such as writing down the information. Patent Literature 1 and 2 disclose techniques that can solve this problem.

Patent Literature 1 discloses a terminal device that automatically saves viewed web page information and re-displays web page information displayed in the past according to a user request.

Patent Literature 2 discloses a terminal device that allows a view mode to be selected from a normal mode and a temporary watch mode. When desired information cannot be found in the temporary watch mode, the terminal device can re-display information viewed before switching to the temporary watch mode.

### Citation List

### Patent Literature

Patent Literature 1: Unexamined Japanese Patent Application Kokai Publication No. 2011-204158
Patent Literature 2: Unexamined Japanese Patent Application Kokai Publication No. 2009-053784

### Summary of Invention

### Technical Problem

The terminal devices disclosed in Patent Literature 1 and 2 can re-display a web page viewed in the past. When the web page is re-displayed, information of a web page being currently viewed disappears from the screen. Accordingly, the terminal devices cannot simultaneously display the web page being currently displayed and the web page viewed in the past. Thus, there is a problem in that viewing efficiency is reduced when performing work, such as comparison of old and new web pages.

The same problem exists not only in displaying a web page but also similarly in displaying various kinds of content.

The present disclosure has been accomplished in view of the above circumstances, and an objective of the disclosure is to provide a terminal device, an information display method, and a non-transitory recording medium that allow an operating person to more efficiently view information. In addition, another objective of the disclosure is to provide a terminal device, an information display method, and a non-transitory recording medium that allow content to be displayed in an easily comparable manner.

### Solution to Problem

In order to achieve the above objectives, a terminal device according to a first aspect of the present disclosure is characterized by including:
display means for displaying information;
first detection means for detecting a first input;
second detection means for detecting a second input;
designation means for designating specific information from among the information displayed by the display means on a basis of the first input; and
screen control means for causing the display means to display new information on a basis of the second input,
in which, while still displaying the specific information designated by the designation means, the display means is caused to display the new information by the screen control means.

In order to achieve the objectives, an information display method according to a second aspect of the present disclosure is characterized by including:
a display step of displaying information;
a designation step of designating any of the information displayed at the display step;
an update instruction step of instructing update of the information displayed at the display step; and
a control step of, when the update of the information being displayed has been instructed at the update instruction step, controlling the display step to update the displayed information, and when the any of the information has been designated at the designation step and the update of the information being displayed has been instructed at the update instruction step, controlling the display step to, while still displaying the information designated at the designation step, update other displayed information.

In order to achieve the objectives, a non-transitory recording medium according to a third aspect of the present disclosure is a non-transitory recording medium recorded with a program characterized by causing a computer to achieve:
a display function of displaying information;
a designation function of designating any of the information displayed by the display function;
an update instruction function of instructing update of the information displayed by the display function; and
a control function of, when the update of the information being displayed has been instructed by the update instruction function, controlling the display function to update the displayed information, and when the any of the information has been designated by the designation function and the update of the information being displayed has been instructed by the update instruction function, controlling the display function to, while still displaying the information designated by the designation function, update other displayed information.

### Advantageous Effects of Invention

The present disclosure can provide a terminal device, an information display method, and a non-transitory recording medium that allow an operating person to more efficiently view information.

### Brief Description of Drawings

FIG. 1 is a block diagram depicting a hardware structure of a terminal device according to a first embodiment;
FIG. 2 is a block diagram depicting a functional structure of the terminal device according to the first embodiment;
FIG. 3 is an external view of the terminal device according to the first embodiment;
FIG. 4 is a flowchart of an input detection process of the terminal device according to the first embodiment;
FIG. 5A is a diagram for illustrating an specific operational example of the terminal device according to the first embodiment;
FIG. 5B is a diagram for illustrating the specific operational example of the terminal device according to the first embodiment;
FIG. 5C is a diagram for illustrating the specific operational example of the terminal device according to the first embodiment;
FIG. 6 is a flowchart of a screen display operation process according to the specific example depicted in FIGS. 5A to 5C;
FIG. 7A is an external view of a terminal device according to a second embodiment;
FIG. 7B is an external view of the terminal device according to the second embodiment;
FIG. 8A is an external view of a terminal device according to a third embodiment;
FIG. 8B is an external view of the terminal device according to the third embodiment;
FIG. 8C is an external view of the terminal device according to the third embodiment;
FIG. 9A is a diagram for illustrating a specific operational example of a terminal device according to a fourth embodiment;
FIG. 9B is a diagram for illustrating the specific operational example of the terminal device according to the fourth embodiment;
FIG. 9C is a diagram for illustrating the specific operational example of the terminal device according to the fourth embodiment;
FIG. 10 is a flowchart of a scrolling process in the execution of the specific example depicted in FIGS. 9A to 9C;
FIG. 11A is a diagram for illustrating a specific operational example of a terminal device according to a fifth embodiment;
FIG. 11B is a diagram for illustrating the specific operational example of the terminal device according to the fifth embodiment;
FIG. 11C is a diagram for illustrating the specific operational example of the terminal device according to the fifth embodiment; and
FIG. 12 is a flowchart of a screen display changing process in the execution of the specific example depicted in FIGS. 11A to 11C.

### Description of Embodiments

Hereinafter, terminal devices according to some embodiments of the present disclosure will be described with reference to the drawings.

### (First Embodiment)

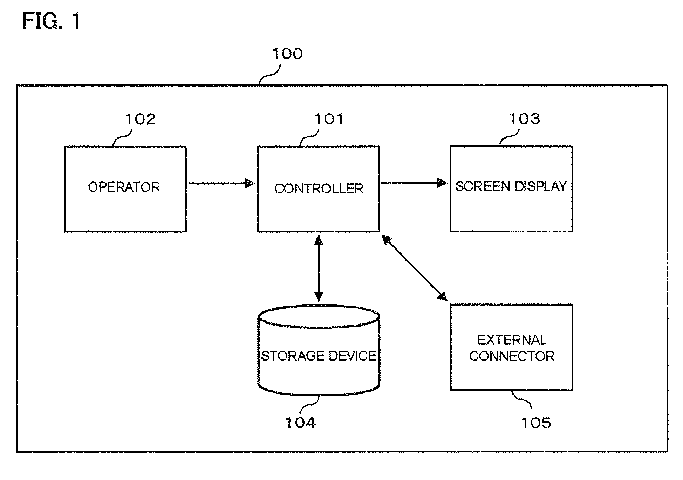

A terminal device 100 according to a first embodiment includes, for example, a function of displaying a web page or the like by making access to the Internet. The terminal device 100 includes a controller 101, an operator 102, a screen display 103, a storage device 104, and an external connector 105, as depicted in FIG. 1.

The controller 101 includes a central processing unit (CPU), a read only memory (ROM), a random access memory (RAM), and the like, and reads out a program from the storage device 104 to execute the program, thereby controlling the terminal device 100 as a whole. For example, the controller 101 performs tasks, such as making access to Internet sites, screen displaying on the screen display 103, reading-out of data from the storage device 104, writing of data into the storage device 104, and communication with an external through the external connector 105.

The operator 102 receives an operation of an operating person as an input and transmits the input as information to the controller 101. For example, when the terminal device 100 is a mobile phone, the operator 102 includes a touch panel, buttons, and the like. Alternatively, when the terminal device 100 is a device such as a desktop type personal computer, the operator 102 includes a mouse, a keyboard, and the like.

The screen display 103 displays, on a basis of control of the controller 101, information that the terminal device 100 should display for the operating person, including content such as e-mail and web pages and an operation screen for operating the terminal device 100 itself. The screen display 103 comprises a liquid crystal display, an organic electroluminescence display, or the like.

The storage device 104 stores programs to be executed by the controller 101 and data to be used in the execution of the programs, and provides each program and the data to the controller 101 in response to a request. The storage device 104 stores the programs that the controller 141 executes (for example, a program for displaying many information cells described later, a content processing program such as an input detecting program, and the like), data, and the like. The storage device 104 comprises, for example, a hard disk, a nonvolatile semiconductor memory, and the like.

The external connector 105 relays information when the terminal device 100 receives and transmits information from and to the external, for example, the Internet, by the control of the controller 101. For example, when the terminal device 100 is a mobile phone, the external connector 105 connects the terminal device 100 and mobile phone communication base stations. When the terminal device 100 is a device such as a desktop type personal computer, the external connector 105 connects the terminal device 100 to a local area network wirelessly or wiredly. The external connector 105 comprises, for example, an antenna, a network interface device, and the like.

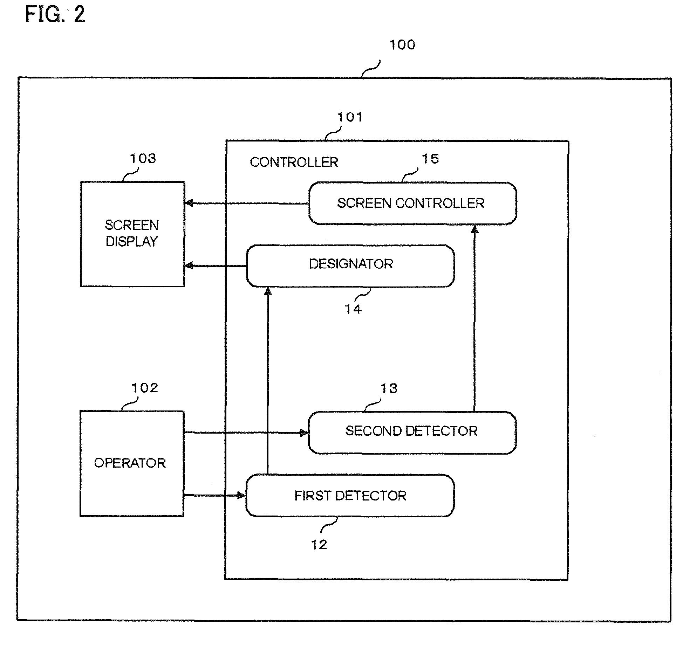

The controller 101 achieves each function depicted in FIG. 2 by executing a program read in from the storage device 104. Specifically, the controller 101 functions as a first detector 12, a second detector 13, a designator 14, and a screen controller 15 by executing the program.

The first detector 12 detects a first input as an input that indicates a specific part from among information displayed on the screen display 103, and transmits information of the first input to the designator 14. Herein, the specific part means a part desired to be fixedly displayed on a screen even when screen scrolling or page feeding is instructed. The specific part is designated, for example, by long pressing a liquid crystal panel 110 with a touch sensor.

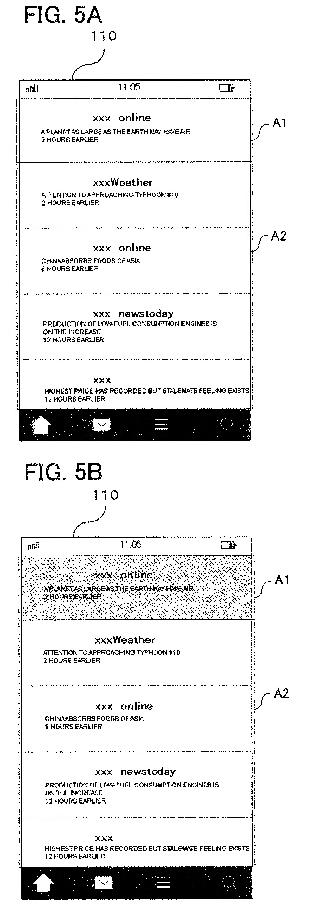

A specific example is as follows. For example, as depicted in FIG. 5A, during operation of an application displaying many information cells on the screen display 103, when one of the information cells, for example, an uppermost information cell A1 is desired to be fixedly displayed, an operating person long presses the information cell A1. The first detector 12 detects the long pressing operation and transmits, to the designator 14, the fact that the first input has been made and information for specifying the information cell A1 to be targeted.

The second detector 13 depicted in FIG. 2 detects a second input for instructing changing (for example, scrolling or page-feeding) of information being displayed on the screen display 103, and transmits information of the second input to the screen controller 15.

A specific example thereof is as follows. For example, as depicted in FIG. 5A, during the operation of the application displaying many information cells on the screen display 103, when the operating person has flicked the screen from down to up to scroll the screen, the second detector 13 detects the flick operation and transmits to the screen controller 15.

The designator 14 depicted in FIG. 2 receives the information transmitted from the first detector 12 and designates, from among the information being displayed on the screen display 103, information being displayed on (included in) the part that the operating person has specified as the first input. Furthermore, the designator 14 clearly indicates the designation of the information by coloring and displaying or the like of the designated information.

Specifically, for example, as depicted in FIG. 5A, during the operation of the application displaying many information cells on the screen display 103, when the operating person has specified the uppermost cell A1 as the specific part, the designator 14 receives, from the first detector 12, the fact that the specification operation has been performed and information for specifying the information cell A1 to be targeted, and designates the information cell A1. In addition, for example, as depicted in FIG. 5B, the designator 14 clearly indicates the fact that the information cell A1 has been designated, by controlling the screen controller 15 to color a region of the information cell A1 specified on the screen display 103 or by any other way.

The screen controller 15 depicted in FIG. 2 receives information on changing of the information being displayed on the screen display 103 transmitted from the second detector 13, and displays new information reflecting the changing on the screen display 103.

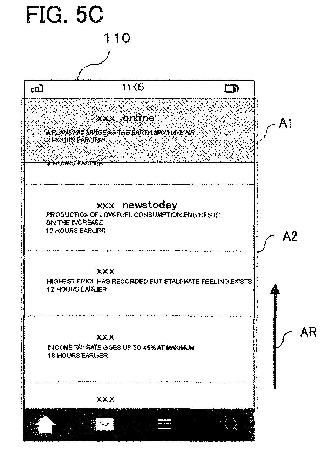

Specifically, for example, as depicted in FIG. 5C, the screen controller 15 colors and displays a region designated by the designator 14. In addition, upon reception of the fact that the flick operation has been made from down to up on the screen from the second detector 13, the screen controller 15 scrolls the information cells being displayed on the screen upwardly to update the display so as to display new information on a lower part on the screen. At that time, when there is a region displaying the information designated by the designator 14 on the screen display 103, the screen controller 15 keeps the information of the region displayed as it is, and causes a new information cell to be displayed on a region other than the region.

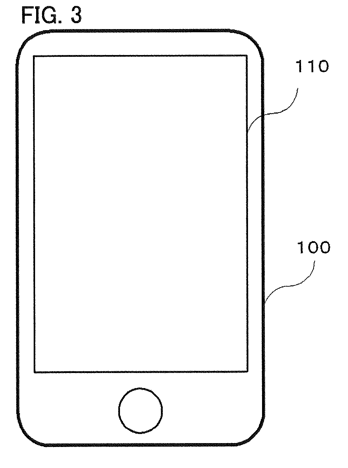

FIG. 3 is an external view of the terminal device 100. The present embodiment illustrates an example of the terminal device 100 comprising a so-called smart phone, but the terminal device 100 is not limited to a mobile phone such as a smart phone. For example, the terminal device 100 can be any information processing device (computer), such as a mobile information terminal such as a personal digital assistant (PDA), a notebook or desktop type personal computer, a digital camera, or a music player.

The terminal device 100 includes the liquid crystal panel 110 with a touch sensor (touch panel), as depicted in FIG. 3. The liquid crystal panel 110 with a touch sensor, as the screen display 103, displays various information and, in addition, as the operator 102, detects an input to the touch sensor (touch panel).

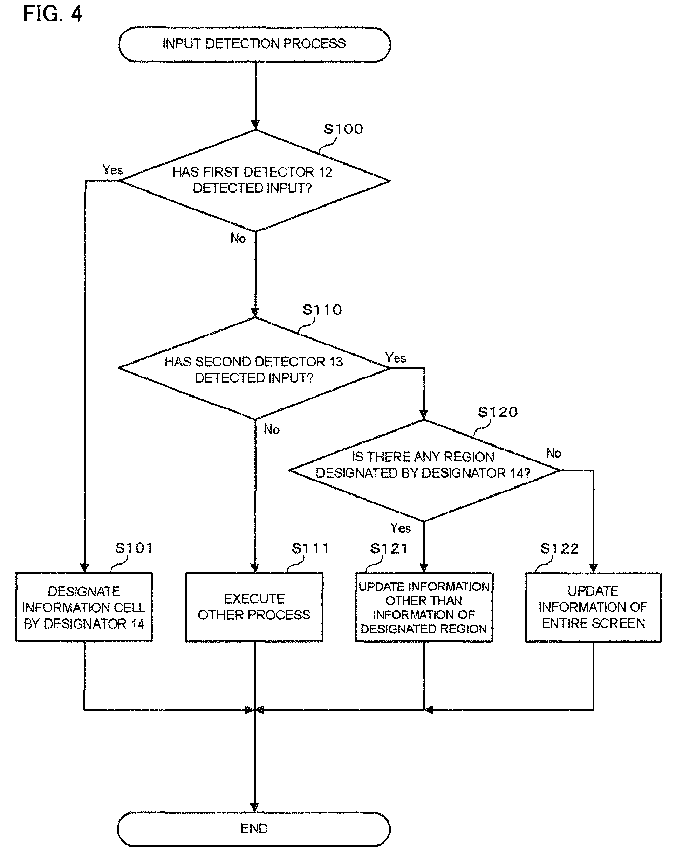

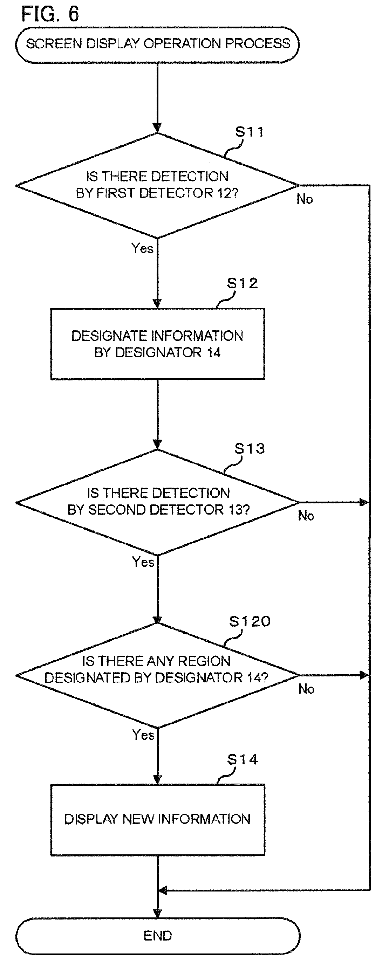

Next, operation of the terminal device 100 thus configured will be illustrated with reference to FIGS. 4 to 6. FIG. 4 is a flowchart depicting an input detection process of the terminal device 100. FIGS. 5A to 5C are diagrams depicting screens displayed on the liquid crystal panel 110 with the touch sensor. FIG. 5A is a screen view that indicates content information, where many laterally-long information cells are arranged for display in a vertical direction; FIG. 5B is a screen view of a state where the information cell A1 has been designated additionally in the state displayed in FIG. 5A; and FIG. 5C is a screen view of a state where new information has been displayed in a region A2 additionally in the state displayed in FIG. 5B. FIG. 6 is a flowchart depicting a screen display operation process of the terminal device 100 in the execution of the process depicted in FIGS. 5A to 5C.

The terminal device 100 has a call function, a mail function, a web access function, and the like, as in an ordinary smart phone. However, the following description will be mainly focused on a content display function relating to the present disclosure.

The controller 101 starts the input detection process depicted in FIG. 4 when an input operation onto the liquid crystal panel 110 with the touch sensor has been performed.

First, the controller 101 determines whether or not the first detector 12 has detected a first input (step S100). In other words, the controller 101 determines whether or not an operation for fixedly displaying information, such as long pressing of an information-displaying region of the touch sensor, has been performed.

When the controller 101 has determined that the first detector 12 has detected the first input (step S100: YES), that is, when the present input has been an operation for fixedly displaying information, the designator 14 receives the fact that the first input has been made and the information (the region) indicated by the first input from the first detector 12 and designates the information specified by the operating person (step S101). The designator 14 colors and displays the specified information via the screen controller 15 to clearly indicate the designation of the information.

On the other hand, when the controller 101 has determined at the step S100 that the first detector 12 has not detected the first input (step S100: No), the controller 101 determines whether or not the second detector 13 has detected a second input (step S110). In other words, the controller 101 determines whether or not the operating person has performed an operation for updating and changing information, such as display scrolling or page feeding

When the controller 101 has determined that the second detector 13 has not detected the input (step S110: No), the controller 101 specifies an input content and executes a process according to the specified input content (step S111).

On the other hand, when the controller 101 has determined at the step S110 that the second detector 13 has detected the second input (step S110: Yes), that is, when the present input has been an input for instructing update and changing of information, such as information scrolling and page feeding, the controller 101 determines whether or not there exists a region designated by the designator 14 (step S120).

When having determined that there exists a region designated by the designator 14 (step S120: Yes), the controller 101 keeps the region designated by the designator 14 displayed as it is, and simultaneously updates display of any other region than the region according to the second input (step S121). Accordingly, while still keeping a display of the information of the region designated by the designator 14, that is, the information that the operating person has specified by the first input, the operating person can arrange and display any new pieces of information on one screen to compare the pieces of information or can refer to the new information one after another while referring to the display of the information being kept.

On the other hand, when having determined that there is no region designated by the designator 14 (step S120: No), the controller 101 updates the entire display according to the second input (step S122).

In this manner, with the simple operation, the present embodiment allows new information to be displayed while still keeping desired information once displayed. Accordingly, it is unnecessary to do bothering work, such as note-taking of information displayed on a previous screen in order to keep previous information when updating displayed information to display new information. Additionally, since old and new information are arranged and displayed on one screen, comparison can easily be made, thus allowing efficient viewing of the information.

Next, the above-described operation will be illustrated on the basis of a specific operation by an operating person with reference to FIGS. 5A, 5B, and 5C and FIG. 6. Herein, for easier understanding, as depicted in FIG. 5A, the illustration will be made by exemplifying the application displaying while scrolling many laterally-long information cells arranged in a vertical direction. In addition, the flowchart of FIG. 6 is a flowchart obtained by extracting parts necessary for the illustration of the specific example from the flowchart depicted in FIG. 4.

Herein, a screen (image) comprising a plurality of cells, depicted in FIG. 5A, is assumed to be being displayed on the liquid crystal panel 110 with the touch sensor.

Now, an operating person is assumed to desire to fixedly display the information cell A1 (desire to continuously display the information cell A1 even after scrolling of the screen or the like). In this case, the operating person specifies the information cell A1 by long-touching (long pressing) a region of the information cell A1. Then, the first detector 12 detects the operation (step S 11: Yes), and transmits the fact that the first input has been made and information for indicating the region specified by the operation to the designator 14.

The designator 14 receives the information transmitted from the first detector 12 and specifies the information cell A1 for which the operating person has performed the long-touching operation (step S12). Furthermore, as depicted in FIG. 5B, the designator 14 clearly indicates the designated information cell by coloring the information cell A1 on the screen display via the screen controller 15.

After that, the operating person is assumed to flick on the liquid crystal panel 110 with the touch sensor in an arrow (AR) direction of FIG. 5C in order to refer to a cell located on a lower side of the cells displayed on the screen. Then, the second detector 13 detects that the second input has been made (step S13: Yes). Herein, since the information cell A1 has been designated by the designator 14, the controller 101 determines that there is a region designated by the designator 14 (step S120: Yes) and transmits the information to the screen controller 15.

The screen controller 15 receives the information transmitted from the second detector 13 and causes an image being displayed on a region (region A2) other than the region displaying the information designated by the designator 14 on the screen display 103, as depicted in FIG. 5C, to be scrolled in a direction of the flick, that is, in an upward direction, thereby displaying new information (step S14). On the other hand, since the information cell A1 has been designated by the designator 14, the terminal device 100 continuously displays the information cell A1 as it is.

As depicted in the specific example, in the present embodiment, while keeping the display of the old information (information cell A1) fixed, the operating person can update (scroll) information being displayed on the other region and display the old information and the newly displayed information side by side on one screen. Accordingly, the operating person can more efficiently view the information, and, for example, can easily compare content.

When the operating person performs the flick operation in the state of FIG. 5A, that is, in a state where there is no region designated to be fixedly displayed, the second input (flick) is detected at the step S110 (step S110: Yes). In this case, since there is no designation of information by the designator 14, a determination of "No" is made at the step S120, and the entire screen is scrolled (step S122).

In the first embodiment, the liquid crystal panel 110 with the touch sensor serves as the screen display 103 to display information and also serves as the operator 102 to perform an input to each of the first detector 12 and the second detector 13. However, the present disclosure is not limited thereto. For example, even with use of a liquid crystal display without a touch sensor as the screen display 103 and use of a mouse as an input device inputting to the first detector 12 and the second detector 13, the same functions can be obtained.

In addition, when displaying new information, the terminal device 100 may not only scroll the information cells to an upward or downward direction but also scroll in a lateral direction, or may display new information by page transition or the like.

Although the content example displaying the plurality of cells has been exhibited as an example of displayed information, the present disclosure is not limited thereto and can be widely applied to cases of displaying information divided into any blocks, such as page units. Furthermore, in information without any particular delimitation, a region specified by a first input may be set by a predetermined standard and processed.

### (Second Embodiment)

In the first embodiment, the first input and the second input are both performed by operation onto the liquid crystal panel 110 with the touch sensor. However, an input method itself is optional, and for example, the first input and the second input can be made into physically different mechanisms. By making the first input and the second input into physically different structures, the first input and the second input can be performed without any interference, so that higher operability can be achieved.

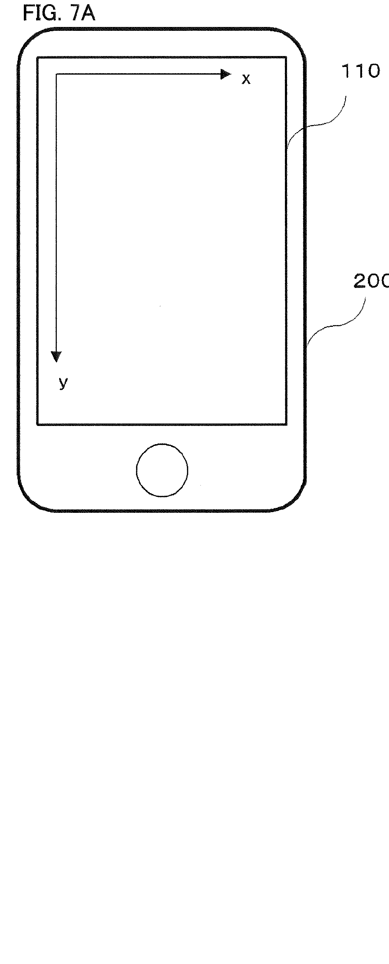

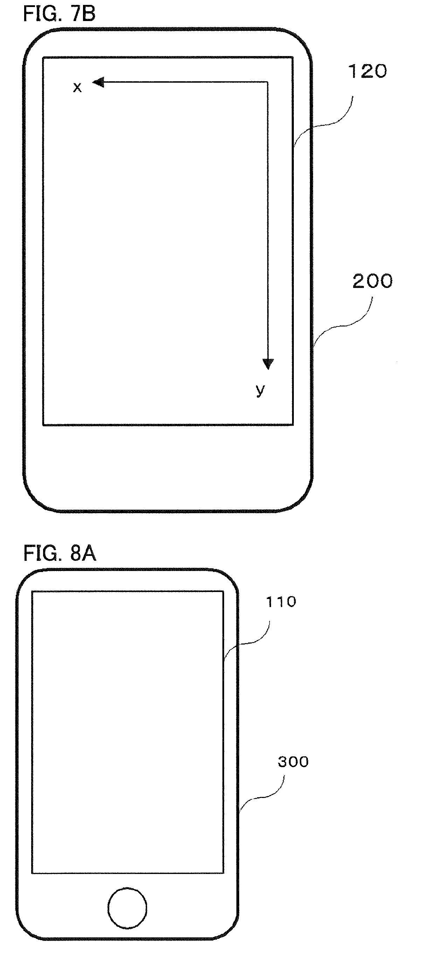

Hereinafter, a description will be given of an embodiment in which the first input and the second input are made into physically different input devices, with reference to FIGS. 7A and 7B.

A terminal device 200 according to a second embodiment includes the liquid crystal panel 110 with a touch sensor on a front surface thereof, as depicted in FIG. 7A, and includes a touch sensor 120 on a back surface thereof (a backside surface of the surface where the liquid crystal panel 110 with the touch sensor is provided), as depicted in FIG. 7B.

The liquid crystal panel 110 with the touch sensor can, as the screen display 103, display various information, as well as the touch sensor of the liquid crystal panel 110 with the touch sensor can be used as the second detector 13.

The touch sensor 120 is used as the first detector 12. The touch sensor 120 has a coordinate system corresponding to the liquid crystal panel 110 with the touch sensor. Thus, when designating specific information (region) displayed on the liquid crystal panel 110 with the touch sensor, the operating person can designate the specific information (region) by touching on a part of the touch sensor 120 corresponding to the region where the information is being displayed on the liquid crystal panel 110 with the touch sensor.

In the terminal device 200, operations of the screen display 103, the first detector 12, the second detector 13, the designator 14, and the screen controller 15 are the same as those in the first embodiment.

When an operating person designates specific information on a screen of the terminal device 200, the specific information can be designated by an operation such as touching of a corresponding part of the touch sensor 120 on the backside surface of the terminal device 200. In addition, the operating person, when desiring to display new information on a region where information other than the specific information is being displayed, can display the new information on the screen by an operation such as touch flick on the liquid crystal panel 110 with the touch sensor on the front surface of the terminal device 200.

Herein, in touching the touch sensor 120, for example, the operating person will touch the touch sensor 120 with the operating person's index finger, and in touch and/or flick on the liquid crystal panel 110 with the touch sensor, the operating person will touch and/or flick with a thumb of the same hand. In this case, since the index finger and the thumb thereof, respectively, touch separately the back surface and the front surface of the terminal device 200, the fingers do not disturb each other during the operation. Thus, while holding the terminal device 200 in one hand thereof, the operating person can operate with the index finger and the thumb of the hand. In addition, while holding the terminal device 200 in one hand thereof, the operating person can operate the touch sensor 120 with the finger of the hand and operate the liquid crystal panel 110 with the touch sensor with the other hand.

As described above, in the second embodiment, the operating person can separately perform an input to the first detector 12 and an input to the second detector 13 by separating into the input to the front surface and the input to the back surface of the terminal device. Thereby, in addition to the advantageous effect by the first embodiment, the operating person can perform inputs into both detection means without any interference, so that higher operability can be achieved.

In the embodiment described above, the touch sensor of the liquid crystal panel 110 with the touch sensor has been used as the second detector 13 and the touch sensor 120 has been used as the first detector 12. However, conversely, even with use of the touch sensor of the liquid crystal panel 110 with the touch sensor as the first detector 12 and the touch sensor 120 as the second detector 13, the same advantageous effect can be obtained.

A size of the touch sensor 120 with respect to the liquid crystal panel 110 with the touch sensor is optional. For example, in a case where the touch sensor 120 is installed in the same size as the liquid crystal panel 110 with the touch sensor in such a manner that the front and the back thereof correspond to each other, an operating person who designates desired information can designate the specific information by touching a part of the touch sensor 120 corresponding to just a backside of a part where the specific information is being displayed on the liquid crystal panel 110 with the touch sensor, so that more easily understandable operability can be achieved. In addition, installing the touch sensor 120 in a smaller size than the liquid crystal panel 110 with the touch sensor can achieve operation in a smaller region. Conversely, installing the touch sensor 120 in a larger size than the liquid crystal panel 110 with the touch sensor can achieve an operability that facilitates selection of a small information cell.

In the present embodiment, the touch sensors have been used as the first detector 12 and the second detector 13. However, the devices used as those detectors are not limited to touch sensors. For example, pointing devices with a wheel or the like can be used as the first detector 12 and the second detector 13 to obtain the same advantageous effect.

### (Third Embodiment)

In the second embodiment of the present disclosure, the terminal device 200 has included the liquid crystal panel 110 with the touch sensor on the front thereof and the touch sensor 120 on the back surface thereof. However, since the touch sensors are provided on the front surface and the back surface of a casing thereof, the operating person cannot simultaneously visually recognize both of the touch sensors. For example, when the back surface thereof is covered with a cover, the operating person may not recognize until the operating person actually touches the back surface of the casing to confirm.

The third embodiment provides the operator 102 on a side surface of the terminal device to allow an operating person to simultaneously visually recognize an input portion into the first detector 12 and an input portion into the second detector 13, so that the operating person can handle the operator more effectively.

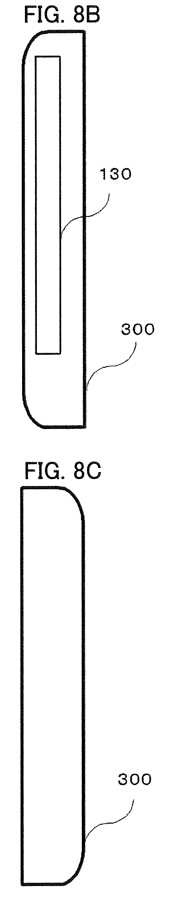

Hereinafter, a terminal device 300 according to a third embodiment will be described with reference o FIGS. 8A to 8C.

The terminal device 300 includes the liquid crystal panel 110 with the touch sensor on a front thereof, as depicted in FIG. 8A. In addition, as depicted in FIG. 8C, the terminal device 300 includes a touch sensor 130 on a right side surface of a casing thereof. The liquid crystal panel 110 with the touch sensor can, as the screen display 103, display various information, as well as the touch sensor is used as the second detector 13. As depicted in FIG. 8C, no touch sensor is provided on a left side surface of the casing thereof.

The touch sensor 130 has a coordinate system in which a position thereof in a vertical direction corresponds to the position of the liquid crystal panel 110 with the touch sensor. Thus, when designating specific information displayed on the liquid crystal panel 110 with the touch sensor, the specific information can be designated by touching a part of the touch sensor 130 corresponding to a region displaying the information.

When the first detector 12 detects an input from the touch sensor 130 on the right side surface of the casing, the designator 14 designates information being displayed at a position (height) corresponding to a position at which the input has been detected. Operations after that are the same as those in the second embodiment, and thus a description thereof will be omitted.

When designating specific information (information desired to be fixedly displayed) on the screen in the terminal device 300 described above, the operating person can designate the specific information by performing an operation such as touching a corresponding part of the touch sensor 130 on the right side surface of the terminal device 300. In addition, when desiring to display new information on a region displaying information other than the specific information, the operating person can display the new information on the screen by performing an operation such as touch and/or flick on the liquid crystal panel 110 with the touch sensor on the front surface of the terminal device 300.

Herein, in touching the touch sensor 130, for example, the operating person will touch the touch sensor 130 with the index finger, and in touch and/or flick on the liquid crystal panel 110 with the touch sensor, the operating person will touch flick with the thumb of the same hand. Since the index finger and the thumb, respectively, touch separately the back surface and the front surface of the terminal device 300, the fingers do not disturb each other during the operation. Thus, while holding the terminal device 300 in one hand, the operating person can operate with the index finger and the thumb of the hand. In addition, while holding the terminal device 300 in one hand, the operating person can operate the touch sensor 130 with the finger of the hand and can operate the liquid crystal panel 110 with the touch sensor with the other hand.

Furthermore, the operating person can simultaneously visually recognize the touch sensor 130 on the right side surface and the liquid crystal panel 110 with the touch sensor. Thus, for example, when the touch sensor 130 is covered with a cover, the operating person can immediately recognize the cover.

As described above, the operating person can simultaneously visually recognize the part for performing the first input and the part for performing the second input, thereby allowing the operating person to handle the operator more effectively. Thus, in addition to the advantageous effects by the first and the second embodiments, the operating person can simultaneously visually recognize both detection means, so that higher operability can be achieved.

Although the present embodiment has arranged the touch sensor 130 on the right side surface of the terminal device, the touch sensor 130 may be arranged on the left side surface thereof or on both of the right and left side surfaces thereof. In addition, the present embodiment has used the touch sensor of the liquid crystal panel 110 with the touch sensor as the second detector 13 and the touch sensor 130 as the first detector 12. However, conversely, the touch sensor of the liquid crystal panel 110 with the touch sensor may be used as the first detector 12 and the touch sensor 130 may be used as the second detector 13.

A size of the touch sensor 130 with respect to the liquid crystal panel 110 with the touch sensor is optional. For example, in a case where the touch sensor 130 is installed in such a manner that a size thereof in a vertical direction matches the size of the liquid crystal panel 110 with the touch sensor, the operating person, when designating desired information, can designate the specific information by touching a region of the touch sensor 130 located at the same height as a part where the specific information is being displayed on the liquid crystal panel 110 with the touch sensor, so that easily understandable operability can be achieved. In addition, installing the touch sensor 130 in a smaller size can achieve operation in a smaller region, whereas installing the touch sensor 130 in a large size can achieve operability that further facilitates selection of a small information cell.

In addition, although the present embodiment has used the touch sensors as the first detector 12 and the second detector 13, the devices used as those detectors are not limited to touch sensors. For example, pointing devices with a wheel can be used as the first detector 12 and the second detector 13 to obtain the same advantageous effect.

### (Fourth Embodiment)

When updating and changing information on the display screen, a more easily understandable interface can be achieved by differentiating between displaying manners depending on a presence or absence of information to be fixedly displayed and allowing an operating person to recognize when information is being fixedly displayed.

A fourth embodiment of the present disclosure achieves an interface that intuitively notifies an operating person of whether or not there is designated information.

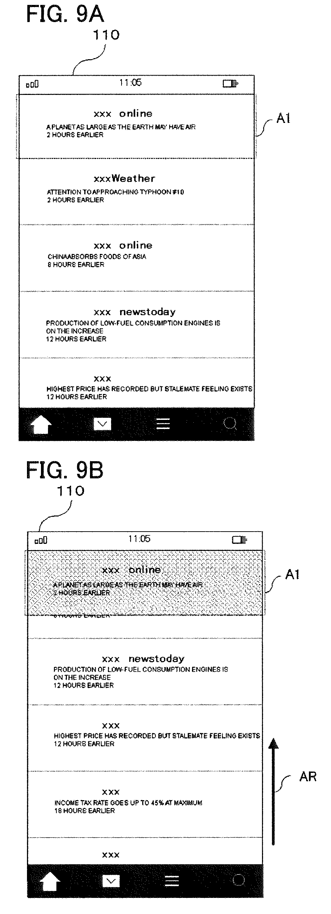

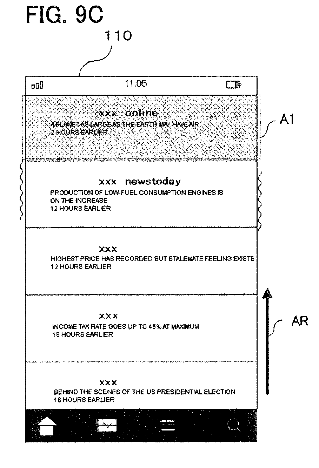

FIGS. 9B and 9C are screen views on the liquid crystal panel 110 with the touch sensor as appearing when an operating person flicks in an arrow (AR) direction in a state where the information cell A1 has been designated as a cell to be fixedly displayed in a state depicted in FIG. 9A. The fourth embodiment will be described assuming that the first input and the second input are both performed by operation onto the liquid crystal panel 110 with the touch sensor, as in the first embodiment.

In the terminal device 100, when an operating person scrolls a screen display by a flick operation in a state where there is no information designated by the designator 14, as depicted in FIG. 9A, information being displayed will be smoothly scrolled.

On the other hand, when there is information designated by the designator 14, as depicted in FIGS. 9B and 9C, the screen controller 15 slightly vibrates the display of a moving information cell in a vertical or lateral direction at timing when top and bottom sides of the moving information cell and the designated information cell overlap each other. Even after that, when the operating person further scrolls the screen, the screen is still smoothly scrolled during a time when the top and bottom sides of the information cells do not overlap each other and, then, at the timing when the top and bottom sides thereof overlap each other, the screen controller 15 slightly vibrates a moving information cell. Thereby, every time an information cell is scrolled by an amount of one cell, the moving information cell is slightly vibrated. This is obviously different from the state where there is no designated information.

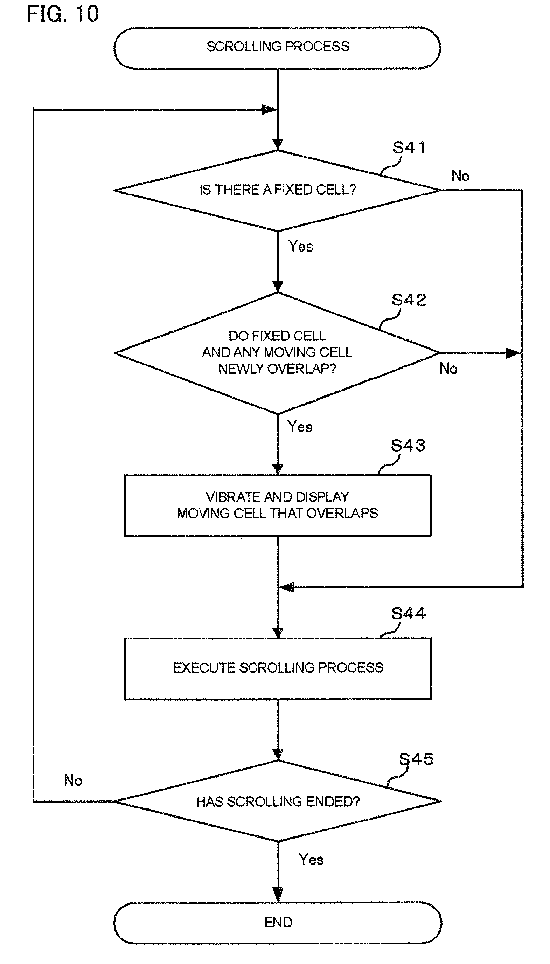

In this case, when a second input operation is made to instruct scrolling such as flick, the second detector 13 detects the input and the controller 101 starts a scrolling process depicted in FIG. 10.

When the scrolling process is started, the controller 101 determines whether or not there exists information (fixedly displayed cell) designated by the designator 14 (step S41).

When there exists information designated by the designator 14 (step S41: Yes), the controller 101 determines whether or not the fixedly displayed cell and a cell being scrolled are brought into a newly overlapping state (step S42). In other words, the controller 101 determines whether or not a top side (in an upward scrolling) or a bottom side (in a downward scrolling) of any cell being scrolled matches a bottom side (in the upward scrolling) or a top side (in the downward scrolling) of the fixedly displayed cell). For example, in the state depicted in FIG. 9B, the cells are determined not to be overlapping each other yet, and in the state of FIG. 9C, the cells are determined to newly overlap each other.

When it has been determined at the step S42 that the fixedly displayed cell and any moving cell newly overlap each other (step S42: Yes), the moving cell that newly overlaps is displayed by vertically and laterally vibrating, as depicted in FIG. 9C (step S43).

Then, normal scrolling is performed (step S44), followed by a determination whether or not the scrolling has ended (step S45).

When the scrolling has ended (step S45: Yes), the process ends, whereas when the scrolling has not ended (step S45: No), the process returns to the step S41.

On the other hand, when it has been determined at the step S41 that there is no information designated by the designator 14 (step S41: No) and when it has been determined at the step S42 that there exists no moving cell that newly overlaps with the fixedly displayed cell (step S42: No), the process jumps to the step S44 to execute a normal scrolling.

In this way, differentiating a manner for scrolling an information cell between the state without any designated information and the state with designated information allows the operating person to intuitively recognize the presence or absence of designated information from a difference between the manners of scrolling. Thereby, the operating person can obtain a more intuitive interface.

As described hereinabove, in addition to the advantageous effects of from the first to the third embodiments, the fourth embodiment can achieve an interface that intuitively notifies an operating person of change in information.

In the above description, the above-described advantageous effect has been obtained by vibrating the information cell just about to overlap with the fixed cell on the screen. However, the present disclosure is not limited thereto. For example, in the state where there is designated information, the operating person can be informed that there is designated information by vibrating the terminal device using a vibrator mounted on the terminal device in response to change on the screen, such as scrolling. Thereby, the same advantageous effect can be obtained even without vibration on the screen. In addition, changing of a scrolling speed or the like can also provide the same advantageous effect.

In this embodiment, a device for notifying information designated by an operating person, such as the screen controller 15 or the vibrator, serves as notification means.

### (Fifth Embodiment)

In the first to the fourth embodiments, while displaying designated information, new information is displayed on a region displaying information other than the designated information, thereby allowing the operating person to efficiently view the information. However, since the designated information has been fixedly displayed, for example, enlargement of the designated information to view the information in more detail has not been able to be made in the above-described embodiments.

On the other hand, the present embodiment can make changes, such as enlargement and/or shrinkage of information designated from among displayed information. Thereby, after designating desired information, the operating person can make any changes, such as enlargement and/or shrinkage of only the designated information, allowing the operating person to view the information more efficiently.

A terminal device 100 according to a fifth embodiment of the present disclosure includes the liquid crystal panel 110 with the touch sensor on a front thereof, as in the terminal device 100 according to the first embodiment, and has the same appearance as that of the terminal device 100 depicted in FIG. 3.

The terminal device 100 according to the fifth embodiment of the present disclosure has the same structure as that of the first embodiment depicted in FIG. 2. Specifically, the terminal device 100 according to the present embodiment includes the controller 101, the operator 102, the screen display 103, the storage device 104, and the external connector 105. Herein, the functions of the first detector 12 and the designator 14 are the same as those in the first embodiment.

The second detector 13 detects, from the operator 102, a second input for enlarging or shrinking specific information designated by the first detector 12 from among information displayed on the screen display 103, and transmits information of the input to the screen controller 15. The second input for enlarging the information is, for example, pinch out, and the second input for shrinking the information is, for example, pinch in.

The screen controller 15 receives the information transmitted from the second detector 13, and displays by enlarging or shrinking the information designated by the designator 14 on the screen display 103.

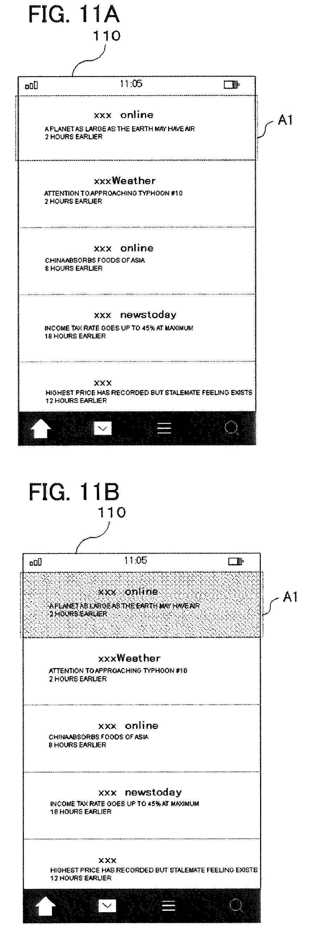

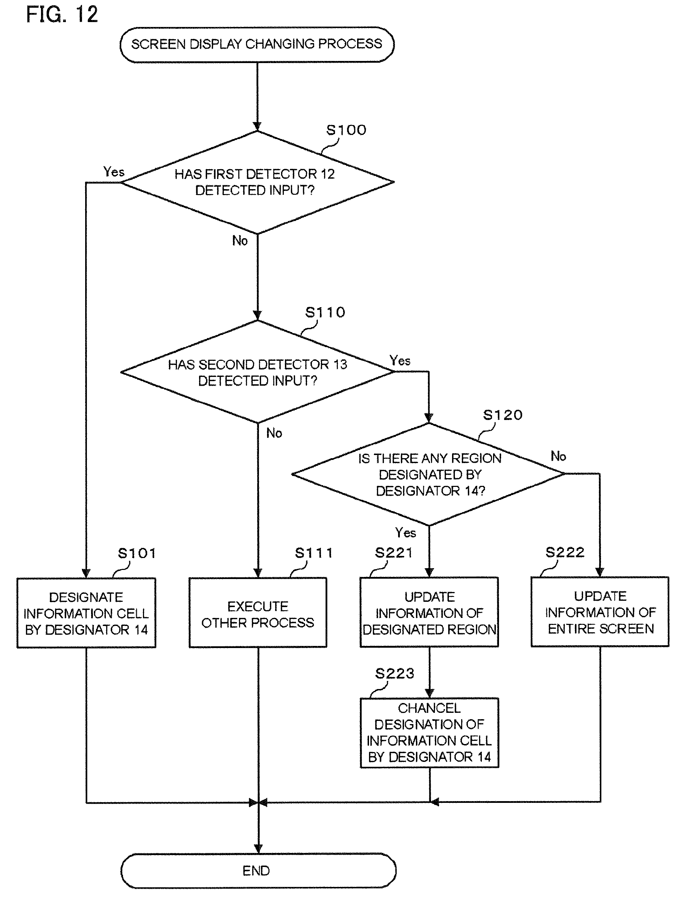

Hereinafter, a description will be given of an operation for enlarging or shrinking information of a predetermined part when an operating person is viewing certain content on the terminal device 100 according to the fifth embodiment of the present disclosure, with reference to display examples of FIGS. 11A to 11C and a flowchart of FIG. 12. In the flowchart of FIG. 12, operations of the terminal device 100 at steps overlapping with the flowcharts of FIGS. 4 and 6 are the same as the processes depicted in the flowcharts of FIGS. 4 and 6.

In the terminal device 100, when displaying content information including many laterally-long information cells arranged and displayed in the vertical direction, the terminal device 100 first displays a screen as depicted in FIG. 11A on the liquid crystal panel 110 with the touch sensor.

Assume that, in order to fixedly display the uppermost information cell A1 on the screen, the operating person has performed long pressing or the like of the information cell A1 on the liquid crystal panel 110 with the touch sensor to specify the information cell A1. Then, the first detector 12 detects the input (step S100) and transmits information of the input to the designator 14.

The designator 14 receives the information transmitted from the first detector 12, designates the information cell A1 to be fixed (step S101), and colors the information cell A1, as depicted in FIG. 11B. The operating person who sees that a color of the information cell A1 has changed can recognize that information of the information cell to be targeted has been designated.

When the operating person has pinched out a region displaying the designated information (information cell A1) in the state of FIG. 11B, the second detector 13 detects the second input (pinch out) (step S110: Yes) and transmits information of the second input to the screen controller 15.

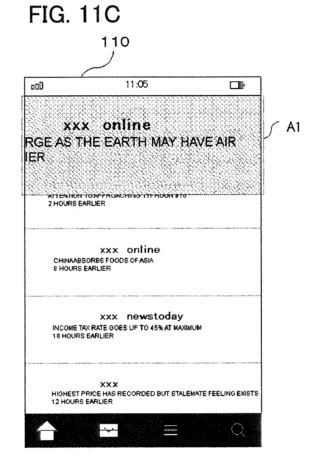

The screen controller 15 receives the information transmitted from the second detector 13 and determines whether or not there exists a region designated by the designator 14 (step S120). In this example, since the designated region (information cell A1) exists (step S120: Yes), the screen controller 15 enlarges and displays the information cell A1, as indicted in FIG. 11C (step S221).

In this way, the terminal device 100 can enlarge and display only the information designated by the designator 14.

In addition, when the operating person has pinched in the region A1 in the state of FIG. 11B, the second detector 13 detects the second input (pinch in) at the step S110 and shrinks and displays information cell displayed in the information cell A1 (step S221).

After going through the above steps, the terminal device 100 cancels the selection of the information cell A1 by the designator 14 (step S223) and ends the process.

On the other hand, when the operating person has performed the second input (pinch out or pinch in) in the display state depicted in FIG. 11A, the second detector 13 detects the second input (step S110: Yes) and transmits information of the second input to the screen controller 15.

The screen controller 15 receives the information transmitted from the second detector 13 and determines whether or not there exists a region designated by the designator 14 (step S120). In this example, since no designated region (information cell) exists (step S120: No), the screen controller 15 displays by enlarging or shrinking the entire information (image) being displayed (step S222).

Thus, in the present embodiment, the operating person can designate specific information by an input to the first detector 12, and can change the display of the specific information by an input to the second detector 13 while keeping the specific information displayed on the screen. As a result, the operating person can view by enlarging or shrinking only the specified information, allowing the operating person to view information more efficiently.

As described hereinabove, the operating person can fix desired information on the display by performing operation on the specified information on the touch panel on the front surface of the casing, as well as can more efficiently view information by one-hand operation on the fixed information.

In the above embodiment, the input to the first detector 12 and the input to the second detector 13 have been performed via the liquid crystal panel 110 with the touch sensor provided on the front surface of the terminal device 100. Accordingly, when performing a pinch in or pinch out operation, the operating person needs to, while holding the terminal device 100 in one hand, perform the pinch in or pinch out operation with the fingers of the other hand on the liquid crystal panel 110 with the touch sensor.

The above embodiment can also be achieved by the terminal device 200 configured such that one of inputs to both detection means is detected by the operator provided on the front surface of the terminal device and the other one thereof is detected by the operator provided on the back surface thereof, as in the second embodiment. In that case, while holding the terminal device 200 on one hand, the operating person operates the liquid crystal panel 110 with the touch sensor on the front surface thereof with the thumb of the hand and operates the touch sensor 120 on the back surface thereof with the other finger of the same hand, whereby the above advantageous effect can be obtained. Thus, the operating person can perform the same operations without using both hands, so that higher operability can be achieved.

Similarly, as in the third embodiment, the second input may be input by operating on the touch panel 130 arranged on the side surface of the casing.

In addition, in the above fifth embodiment, the second detector 13 may have both a function of enlarging and shrinking information designated by the designator 14 and the same function as that of the first embodiment (the function of detecting an input that changes information other than specific information designated by the first detector 12 from among information displayed on the screen display 103 and transmitting information of the input to the screen controller 15). In that case, for example, in FIG. 5B, when the second detector 13 has detected an input for enlarging the region A1, designated information can be enlarged, and when the second detector 13 has detected an input for scrolling the region A2, new information can be displayed on a region displaying information other than the designated information. Thereby, there can be obtained the advantageous effects of both of the first and the fifth embodiments.

The present disclosure does not need to include all of various structures described in the above embodiments. For example, the disclosure of the present application can be sufficiently accomplished by the structure depicted in FIG. 2 including the screen display 103 (display means), the first detector 12 (first detection means), the second detector 13 (second detection means), the designator 14 (designation means), and the screen controller 15 (screen control means).

The terminal device according to the present disclosure can also be achieved, instead of using an exclusive system, by using an ordinary computer system. For example, the terminal device executing the above-described process may be configured by storing a program for executing the above operations into a computer-readable storage medium, such as a flexible disk, a compact disk-read only memory (CD-ROM), a digital versatile disk (DVD), or a magnet optical disk (MO) to distribute to a computer, and installing the program in a computer system. Furthermore, the program may be stored in advance in a disk device or the like included in a server apparatus on the Internet, and, for example, may be downloaded or the like in the computer by means of superimposing on a carrier wave.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Parts or all of the embodiments described above can be described as in the following Supplementary Notes, but are not limited thereto.

### (Supplementary Note 1)

A terminal device characterized by including:
display means for displaying information;
first detection means for detecting a first input;
second detection means for detecting a second input;
designation means for designating specific information from among the information displayed by the display means on a basis of the first input; and
screen control means for causing the display means to display new information on a basis of the second input,
in which, while still displaying the specific information designated by the designation means, the display means is caused to display the new information by the screen control means.

### (Supplementary Note 2)

The terminal device according to the Supplementary Note 1, including:
a display panel capable of performing information display and input detection, in which
the display panel, as the display means, displays information;
the first detection means detects the first input from an input detected by the display panel; and
the second detection means detects the second input from an input detected by the display panel.

### (Supplementary Note 3)

The terminal device according to the Supplementary Note 1, including:
a display panel capable of performing information display and input detection and an input device, in which
the display panel is installed on one surface of the terminal device;
the input device is installed on an other surface of the terminal device;
the display panel, as the display means, displays information;
the first detection means detects the first input from an input detected by the display panel or an input by the input device; and
the second detection means detects the second input from an input by the input device or an input detected by the display panel.

### (Supplementary Note 4)

The terminal device according to the Supplementary Note 3, in which the input device is installed on each of a pair of side surfaces opposing each other on the terminal device.

### (Supplementary Note 5)

The terminal device according to any one of the Supplementary Notes 1 to 4, including:
notification means for notifying that there is specific information designated by the designation means when the screen control means changes display of information other than the specific information designated by the designation means on the basis of the second input.

### (Supplementary Note 6)

The terminal device according to any one of the Supplementary Notes 1 to 5, in which when the specific information designated by the designation means exists, the screen control means processes and displays the specified information as new information in response to the second input.

### (Supplementary Note 7)

The terminal device according to the Supplementary Note 6, in which when the specific information designated by the designation means exists, the screen control means displays by enlarging or shrinking the specific information in response to the second input and keeps a display of information other than the specific information without change.

### (Supplementary Note 8)

An information display method characterized by including:
a display step of displaying information;
a designation step of designating any of the information displayed at the display step;
an update instruction step of instructing update of the information displayed at the display step; and
a control step of, when the update of the information being displayed has been instructed at the update instruction step, controlling the display step to update the displayed information, and when the any of the information has been designated at the designation step and the update of the information being displayed has been instructed at the update instruction step, controlling the display step to, while still displaying the information designated at the designation step, update other displayed information.

### (Supplementary Note 9)

A non-transitory recording medium recorded with a program for causing a computer to achieve:
a display function of displaying information;
a designation function of designating any of the information displayed by the display function;
an update instruction function of instructing update of the information displayed by the display function; and
a control function of, when the update of the information being displayed has been instructed by the update instruction function, controlling the display function to update the displayed information, and when the any of the formation has been designated by the designation function and the update of the information being displayed has been instructed by the update instruction function, controlling the display function to, while still displaying the information designated by the designation function, update other displayed information.

The present disclosure is based on Japanese Patent Application No. 2013-37845 filed on Feb. 27, 2013, the specification, claims, and drawings of which are all incorporated herein in their entireties by reference.

### Reference Signs List

100,200,300 Terminal device
12 First detector
13 Second detector
14 Designator
15 Screen controller
101 Controller
102 Operator
103 Screen display
104 Storage device
105 External connector
110 Liquid crystal panel with a touch sensor
120,130 Touch sensor

## Claims

1. A terminal device comprising:
display means for displaying information;
first detection means for detecting a first input;
second detection means for detecting a second input;
designation means for designating specific information from among the information displayed by the display means on a basis of the first input; and
screen control means for causing the display means to display new information on a basis of the second input,
wherein, while still displaying the specific information designated by the designation means, the display means is caused to display the new information by the screen control means.

2. The terminal device according to Claim 1, comprising:
a display panel capable of performing information display and input detection, wherein
the display panel, as the display means, displays information;
the first detection means detects the first input from an input detected by the display panel; and
the second detection means detects the second input from an input detected by the display panel.

3. The terminal device according to Claim 1, comprising:
a display panel capable of performing information display and input detection and an input device, wherein
the display panel is installed on one surface of the terminal device;
the input device is installed on an other surface of the terminal device;
the display panel, as the display means, displays information;
the first detection means detects the first input from an input detected by the display panel or an input by the input device; and
the second detection means detects the second input from an input by the input device or an input detected by the display panel.

4. The terminal device according to Claim 3, wherein the input device is installed on each of a pair of side surfaces opposing each other on the terminal device.

5. The terminal device according to any one of Claims 1 to 4, comprising:
notification means for notifying that there is specific information designated by the designation means when the screen control means changes display of information other than the specific information designated by the designation means on the basis of the second input.

6. The terminal device according to any one of Claims 1 to 5, wherein when the specific information designated by the designation means exists, the screen control means processes and displays the specified information as new information in response to the second input.

7. The terminal device according to Claim 6, wherein when the specific information designated by the designation means exists, the screen control means displays by enlarging or shrinking the specific information in response to the second input and keeps a display of information other than the specific information without change.

8. An information display method comprising:
a display step of displaying information;
a designation step of designating any of the information displayed at the display step;
an update instruction step of instructing update of the information displayed at the display step; and
a control step of, when the update of the information being displayed has been instructed at the update instruction step, controlling the display step to update the displayed information, and when the any of the information has been designated at the designation step and the update of the information being displayed has been instructed at the update instruction step, controlling the display step to, while still displaying the information designated at the designation step, update other displayed information.

9. A non-transitory recording medium recorded with a program for causing a computer to achieve:
a display function of displaying information;
a designation function of designating any of the information displayed by the display function;
an update instruction function of instructing update of the information displayed by the display function; and
a control function of, when the update of the information being displayed has been instructed by the update instruction function, controlling the display function to update the displayed information, and when the any of the formation has been designated by the designation function and the update of the information being displayed has been instructed by the update instruction function, controlling the display function to, while still displaying the information designated by the designation function, update other displayed information.
